# EUROPÄISCHE PATENTSCHRIFT

(11) **EP 0 565 161 B1**
(45) Veröffentlichungstag und Bekanntmachung des Hinweises auf die Patenterteilung: **28.05.1997**
(21) Anmeldenummer: 93200836.0
(22) Anmeldetag: 23.03.1993
(51) Int. Cl.: B22F 5/08, F16H 55/14

(54) **Bauteil für geräuschgedämpfte Getriebe**
Component for a low-noise transmission
Pièce pour engrenage à faible bruit

(30) Priorität: 04.04.1992 DE 4211318
(43) Veröffentlichungstag der Anmeldung: 13.10.1993
(73) Patentinhaber: METALLWERK PLANSEE GESELLSCHAFT MBH, 86983 Lechbruck (DE)
(72) Erfinder:
(74) Vertreter: Lohnert, Wolfgang, Dr.

(56) Entgegenhaltungen:
- EP-A- 0 097 027
- PATENT ABSTRACTS OF JAPAN vol. 012, no. 260 (M-720)21. Juli 1988 & JP-A-63 043 062 (HONDA MOTOR CO LTD) 24. Februar 1988

## Beschreibung

Die Erfindung betrifft die Verwendung eines achssymmetrischen, einzelne, etwa konzentrische Werkstoffzonen aufweisenden Sinterformteils als geräuschdämpfendes Bauteil, wie Zahnrad, in mechanischen Getrieben, z. B. Kfz-Schaltgetrieben.

In der Automobilindustrie ist die Weiterentwicklung von Schaltgetrieben und Differentialen auch heute noch ein vorrangiges Anliegen. Neben der Erhöhung des Schaltkomforts, der Verringerung der Getriebeabmessungen und der Reduzierung der Leistungsverluste in Getrieben besitzen Maßnahmen zur Eindämmung oder Minderung der Getriebegeräusche hohe Priorität. Bis heute erstrecken sich derartige Maßnahmen auf immer höhere Präzision der Verzahnungsgeometrien und die geräuschgedämpfte Lagerung der gesamten Getriebeeinheit sowie der angrenzenden Aggregate im Kraftfahrzeug. Desweiteren wird versucht, durch konstruktive Maßnahmen die Synchronisation beim Schalten von Getrieben zu erleichtern und so die in der Praxis auftretenden Schaltgeräusche zu reduzieren.

Zum Zweck geräuschdämmender Bauweise von Maschinen und Aggregaten werden vielfach Bauteile verwendet, die aus Werkstoff-Verbunden aufgebaut sind, das heißt, sie weisen Zonen unterschiedlicher Werkstoffzusammensetzung und/oder -struktur auf. Bauteile mit Werkstoff-Oberflächenveredelung, z.B. Oberflächenbeschichtung, gehören ebenso zu den Werkstoff-Verbunden wie solche, bei denen Einzelteile aus verschiedenen Werkstoffen z.B. durch Verschweißen, Verkleben oder auch mechanisches Aufschrumpfen miteinander zu einem Bauteil verbunden sind.

Es ist insbesondere auch bekannt, auf sintermetallurgischem Wege einteilig hergestellte Bauteile mittels unterschiedlicher Verfahren zu solchen mit zonenweise unterschiedlichen Werkstoffen und/oder Strukturen zu gestalten oder durch entsprechende Nachbehandlungen umzugestalten.

Diese Maßnahmen sind ein Mittel, zonenweise verschiedene unterschiedliche Anforderungen an die Eigenschaften eines Bauteils, seien sie nun mechanischer oder chemischer Art, mit der kommerziellen Forderung nach Minimierung der Werkstoff- und Verfahrenskosten zu verbinden. Vielfach lassen sich so die Grenzen des technisch Machbaren erweitern.

Dazu Beispiele aus dem zu berücksichtigenden nächstliegenden Stand der Technik.

Die DE 23 10 536 A1 ("Verfahren zur Herstellung von Gegenständen aus Verbundmetall") beschreibt, einen aus bereits verdichtetem Metallpulver bestehenden Kern mit einem - üblicherweise andersartigen - Metallpulver zu umgeben und die so gebildete Einheit zu verdichten. Ziel des Verfahrens ist es, ein Erzeugnis mit hartem, abriebbeständigem Äußeren und relativ zähem, leicht bearbeitbaren Inneren herzustellen (Seite 2, Absatz 3). Als Beispiele für derartige Erzeugnisse werden Naben mit einem harten Zentralbereich oder auch Zahnfräser mit einem "Fuß aus relativ zähem Material" und "äußerst harter Zahnoberfläche" genannt.

Weiterhin beschreibt die DE 30 07 008 C2 ein "verschleißfestes Teil für Brennkraftmaschinen und Verfahren zu dessen Herstellung". Das verschleißfeste Teil besteht aus einem Grundkörper aus Eisen oder Stahl und einem durch Sintern innig mit dem Grundkörper verbundenen Sinterkörper einer spezifischen Eisenlegierung und mit bestimmten Poreneigenschaften. Auch dort ist das Ziel der Maßnahmen ein Bauteil "hoher Zähigkeit in seinem Körper und hoher Abriebbeständigkeit zumindest in einem Abschnitt seiner Oberfläche" (Spalte 2, Zeilen 41-44).

Diesen vorbekannten Ausführungen eines Sinterformteils als Bauteil ist gemeinsam, daß sie zwar hochfeste, porenarme oder weitgehend porenfreie Randzonen besitzen, daß sie aber keinen hochporösen Zentralbereich aus vergleichsweise duktilem Werkstoff aufweisen.
Vielmehr sind die dort angeführten Verfahren ausschließlich dazu geeignet, auch im Zentralbereich Sinterkorper mit 90 % der theoretischen Dichte und dichter auf wirtschaftliche Weise zu erzeugen. Sie sind nicht darauf ausgerichtet, bei hoher Randdichte im Zentralbereich hohe Porosität zu gewährleisten.

Die US-PS 2 561 579 beschreibt ein pulvermetallurgisch hergestelltes Zahnrad aus einem imprägnierten Eisenwerkstoff, wobei Teilbereiche mit einer Schmelze von Kupfer oder Kupferlegierungen getränkt sind, um dort die Festigkeit zu steigern bzw. die physikalischen Eigenschaften dieser Teilbereiche zu verändern.
Das Problem der Geräuschdämpfung ist dort weder angesprochen noch mittels der dort genannten Ausgestaltungen in naheliegender Weise erreicht.

Aufgabe vorliegender Erfindung sind Maßnahmen bzw. Verfahren zur Geräuschdämmung bzw. Geräuschminderung von Zahnradgetrieben und Differentialen, insbesondere im Kraftfahrzeug-Schaltgetriebebau. Die Aufgabe betrifft die Bereitstellung von Bauteilen, welche die bei der paarweisen Abwälzung von harten Zahnflanken zweier metallischer Getriebeteile unvermeidlicherweise auftretende Geräuschentwicklung möglichst auf diese Zonen beschränkt und eine Übertragung des Körperschalls auf angrenzende Baueinheiten herabsetzt.

Diese Aufgabe wird erfindungsgemäß mit der Verwendung an sich bekannter Mittel in erfindungsgemäßer Ausgestaltung als geräuschgedämpftes Bauteil in mechanischen Getrieben gelöst. Das Bauteil ist ein achssymmetrisches Sinterformteil mit einem etwa ringförmigen Zentralbereich und einer achsnahen inneren sowie einer achsfernen äußeren Randzone, wobei die Randzonen hochfest und weitgehend porenfrei sind und der Zentralbereich aus einem hochporösen, vergleichsweise duktilen Werkstoff besteht, mit der Maßgabe, daß das Porenvolumen im Zentralbereich mehr als 10 bis 50 Vol.% aufweist.

Die Erfindung ist in Anspruch 1 definiert. Bevorzugte Ausführungsformen der Erfindung sind in den Ansprüchen 2-6 definiert.

Der Fachmann verfügt über eine Vielfalt bekannter Verfahren, um hochfeste und hochdichte Zonen in einem im übrigen hochporösen Sinterformteil herzustellen. Diese Verfahren heben sich deutlich gegen diejenige Sintertechnik ab, nach der üblicherweise auf Festigkeit beanspruchte Massenbauteile, wie Getriebezahnräder, pulvermetallurgisch gefertigt werden. Bevorzugte erfindungsgemäße Verwendungen des achssymmetrischen Sinterformteils sind in den Unteransprüchen aufgeführt.

In der Pulvermetallurgie ist heute die wechselseitige Beeinflussung von Werkstoff-Porosität, mechanischer Festigkeit und Zeitstandsfestigkeit bekannt; auch sind die entsprechenden Verfahren zur Beeinflussung so weit abgesichert, daß mit vertretbarem Aufwand innerhalb nützbarer Anwendungsbreite anforderungsspezifische Sinterformteile konstruiert und gefertigt werden können.
So lassen sich die maximal zulässigen Porositäten für spezifische Bauteilfestigkeiten und jeweils unterschiedliche Abmessungen und Werkstoffe mittels der "Finite Elemente" Methode mit vertretbarem Aufwand berechnen.

Für die Schallausbreitung bzw. Schalldämpfung in einem Werkstoff sind bekanntlich sein E-Modul und seine spezifische Dichte (ρ) von wesentlicher Bedeutung. Werkstoffe mit kleinerem E-Modul weisen für höhere Schallfrequenzen (ν) eine stärkere Schalldämpfung auf. Das Frequenzspektrum des Getriebegeräusches wird zu kleineren Frequenzen hin verschoben. Die für die Schallausbreitung maßgebende Schallintensität ändert sich proportional zur Dichte (ρ) und mit dem Quadrat der Frequenz (ν).

Die erfindungsgemäßen Bauteile werden verwendungsbezogen vornehmlich aus Eisen-Werkstoffen gefertigt.
Solche Bauteile aus Eisen-Werkstoffen werden üblicherweise durch Pressen der Pulver sowie durch anschließendes Sintern unter näherungsweiser Beibehaltung der Porositätwerte und fallweise durch weiteres Nachverdichten hergestellt.

Die Zonen unterschiedlicher Dichte lassen sich durch gleichzeitiges Pressen von in den einzelnen Zonen unterschiedlichen Pulvermaterialien ebenso erreichen, wie durch Nachbehandlung eines ursprünglich homogenen Sinterformteils durch oberflächliches Infiltrieren oder Eindiffundieren von Zusatzwerkstoffen in die Werkstoff-Grundmatrix, fallweise unter Reaktionen bzw. Legieren mit dem Grundwerkstoff. Auch die Verwendung spezieller flüchtiger und nicht flüchtiger Porenbildner ist bekannt. Bei Verwendung von Eisenbasis-Werkstoffen haben sich metallische Zusätze wie Nickel, Mangan und Kupfer, aber auch nichtmetallische Zusätze wie Phosphor oder Bor als feste Zusatzwerkstoffe für die Fertigung hochfester Randzonen besonders bewährt.
Nicht unter die Gruppe von Zusatzwerkstoffen fallen z.B. Stickstoff oder Kohlenstoff enthaltende Gase, welche in Eisen-Werkstoffen Karburierungs- oder Nitrierhärtungen ergeben, den E-Modul der Randzone weiter erhöhen.

Eine weitere Gruppe von Maßnahmen zur nachträglichen Verdichtung mäßig poröser Sinterformteile sind mechanische Verfahren, wie das Formteilkalibrieren, bei dem speziell die Oberflächenzonen weiterverdichtet bzw. hochverdichtet werden.

In der Praxis werden zur Bildung hochfester, nicht poröser Randzonen Kombinationsverfahren bevorzugt, bei denen einmal Zusatzwerkstoffe zur Herabsetzung der Porosität des Sintergrundwerkstoffes in die Randzone des Sinterformteiles eingebracht und zum anderen mittels mechanischen Nachverdichtens, und/oder durch Kalibrieren oder auch z.B. durch heißisostatisches Nachverdichten der Sinterformteile die hochfesten, weitgehend porenfreien Randzonen geschaffen werden.

Der Zentralbereich des Sinterformteils kann, muß aber nicht einheitliche Porosität, Struktur und Werkstoffzusammensetzung aufweisen. Er kann vielmehr aus einzelnen Ringbereichen sich sprunghaft oder graduell ändernder Zustände zusammensetzen.

Die gemäß vorliegender Erfindung gegenüber bisher bekannt gewordenen Ausführungen erreichbare Geräuschdämpfung für Getrieberäder ist beträchtlich. Sie ist angesichts der z.B. im Getriebebau vorgeschriebenen, unverzichtbar hohen Festigkeitsanforderungen für den Bereich der Zahnflanken auch überraschend. Bis heute werden bei Getrieberädern bekanntermaßen Schmiede-Werkstoffe mit besonders hohen E-Modulen und besonders hohen mechanischen Festigkeiten verwendet. Die unvermeidbare Folge ist eine hohe Geräuschentwicklung im Betrieb. Der ausschließliche Einsatz geschmiedeter, dichter Werkstoffe hoher Festigkeit und Härtbarkeit verstellte bisher die erfindungsgemäße Lösung des Schall- und Geräuschproblems in Kfz-Getrieben. Es lag bisher kein einschlägiges Erfahrungswissen vor und es war für den Fachmann somit nicht vorgezeichnet, die Werkstoffdichte und -festigkeit (E-Modul) eines Getrieberades im Zentral- gegenüber dem Randbereich mittels sintermetallurgischer Maßnahmen ohne das Risiko gleichzeitiger Nachteile so weit herabzusetzen, daß eine sprunghaft höhere Geräuschdämpfung erreicht wird. Tatsächlich zeigte sich in nicht vorhersehbarer Weise, daß hinreichende Zähigkeit bzw. Duktilität und hohe Porosität, sowie für die bestimmungsgemäße Verwendung ausreichende mechanische Festigkeit und Formstabilität des Sinterformteils, bezogen auf den Pulverpreßling, einander nicht ausschließen.
Da pulvermetallurgisch hergestellte Zahnräder in Getriebeanwendungen für lasttragende und kämmende Einsatzfälle mehr und mehr Verwendung finden, gewinnt auch die vorteilhafte Geräuschdämmung, die gesinterte Zahnräder bei erfindungsgemäßer Auslegung und Gestaltung bringen, zunehmend an Bedeutung.

## Patentansprüche

1. Verwendung eines achssymmetrischen, einzelne konzentrische Werkstoffzonen aufweisenden Sinterformteils mit einem Zentralbereich und einer achsnahen inneren sowie achsfernen äußeren Randzone, wobei dieses aus einheitlichem, porösem Grundwerkstoff mit einem oder mehreren Zusatzwerkstoffen innerhalb einzelner Zonen besteht, dergestalt, daß die Randzonen hochfest und weitgehend porenfrei sind und der Zentralbereich aus einem hochporösen, vergleichsweise duktilen Werkstoff besteht, mit der Maßgabe, daß das Porenvolumen im Zentralbereich mehr als 10 bis 50 Vol.% aufweist, als geräuschdämpfendes Bauteil, wie Zahnrad, in mechanischen Getrieben.

2. Verwendung für den Zweck nach Anspruch 1 mit der Maßgabe, daß der Zentralbereich einen E-Modul kleiner dem von gehärtetem Schmiedestahl besitzt.

3. Verwendung für den Zweck nach Anspruch 1 mit der Maßgabe, daß das Sinterformteil aus einem Eisenbasis-Werkstoff besteht.

4. Verwendung für den Zweck nach Anspruch 1 mit der Maßgabe, daß das Sinterformteil mehr als drei radial aufeinanderfolgende Zonen unterschiedlicher Werkstoff-Zusammensetzung aufweist.

5. Verwendung für den Zweck nach Anspruch 1 mit der Maßgabe, daß der Zentralbereich einzelne konzentrische Bereiche unterschiedlicher Porosität und Werkstoffzusammensetzung aufweist.

6. Verwendung für den Zweck nach Anspruch 6 mit der Maßgabe, daß der Grundwerkstoff ein Eisenbasiswerkstoff
und die Zusatzwerkstoffe Mangan, Phosphor und/oder Bor sind.

## Claims

1. Use of an axially symmetrical sintered moulded part having individual concentric material zones, having a central region and an inner peripheral zone close to the axis and an outer peripheral zone remote from the axis, wherein this consists of uniform, porous base material with one or more additive materials within individual zones, such that the peripheral zones are highly solid and substantially non-porous and the central region consists of a highly porous, comparatively ductile material, with the proviso that the pore volume in the central region is more than 10 to 50 % vol., as a noise-damping component, such as a gearwheel, in mechanical gearboxes.

2. Use for the purpose according to claim 1, with the proviso that the central region has a modulus of elasticity smaller than that of hardened forged steel.

3. Use for the purpose according to claim 1, with the proviso that the sintered moulded part consists of an iron-based material.

4. Use for the purpose according to claim 1, with the proviso that the sintered moulded part has more than three radially consecutive zones of different material composition.

5. Use for the purpose according to claim 1, with the proviso that the central region has individual concentric regions of different porosity and material composition.

6. Use for the purpose according to claim 1, with the proviso that the base material is an iron-based material and the additive materials are manganese, phosphor and/or boron.

## Revendications

1. Utilisation comme composant amortisseur de bruit dans des transmissions mécaniques, par exemple comme engrenage, d'une ébauche frittée symétrique par rapport à un axe, à zones individuelles concentriques de matériaux, qui comporte une région centrale et une zone de bord intérieure proche de l'axe ainsi qu'une zone de bord extérieure distante de l'axe, l'ébauche se composant d'un matériau de base unique, poreux, incluant un ou plusieurs matériaux additionnels à l'intérieur de zones individuelles, d'une structure telle que les zones de bord sont d'une haute résistance mécanique et essentiellement exemptes de pores et que la région centrale se compose d'un matériau de haute porosité relativement ductile, dans des conditions telles que le volume des pores de la région centrale est supérieur à 10 à 50 % en volume.

2. Utilisation selon la revendication 1 dans des conditions telles que le module E de la région centrale est inférieur à celui de l'acier forgé trempé.

3. Utilisation selon la revendication 1, dans des conditions telles que l'ébauche frittée se compose d'un matériau à base de fer.

4. Utilisation selon la revendication 1, dans des conditions telles que l'ébauche frittée comporte plus de trois zones radialement consécutives, dont les compositions de matériaux sont différentes.

5. Utilisation selon la revendication 1 dans des conditions telles que la région centrale comporte des régions concentriques individuelles dont la porosité et la composition de matériau sont différentes.

6. Utilisation selon la revendication 1 dans des conditions telles que le matériau de base est un matériau à base de fer et les matériaux additionnels sont du manganèse, du phosphore et/ou du bore.
